# EUROPEAN PATENT APPLICATION

(11) **EP 0 586 836 A1**
(43) Date of publication of application: **16.03.1994**
(21) Application number: 93111408.6
(22) Date of filing: 15.07.1993
(51) Int. Cl.: A47G 7/06, A47G 7/08, B65D 85/52

(54) **Decorative assembly for a floral grouping**

(30) Priority: 05.08.1992 US 926098; 08.09.1992 US 941992; 22.09.1992 US 949175
(71) Applicant: Highland Supply Corporation, Highland, Illinois 62249 (US)
(72) Inventor: Weder, Donald E., Highland, Illinois 62249 (US); Straeter, William F., Breese, Illinois 62230 (US); King, Michael F., Staunton, Illinois 62088 (US)
(74) Representative: Baillie, Iain Cameron

(57) **Abstract**

A decorative assembly for a floral grouping comprising a floral holding material (18a) and a sheet of material (10a). The floral holding material is constructed of a material capable of receiving a portion of a floral grouping and supporting the floral grouping. The sheet of material is extended about a portion of the floral holding material and a crimped portion (32a) is formed in the sheet of material with the crimped portion cooperating to hold the sheet of material about the floral holding material to provide a decorative covering. The decorative assembly may include a decorative covering for a flower pot where the sheet of material is extended about an outer peripheral surface of the flower pot, and a band is secured about a portion of the sheet of material to form a crimped portion in the sheet of material for cooperating to hold the sheet of material in the position extending about the flower pot to provide the decorative covering.

## Description

### FIELD OF THE INVENTION

The present invention relates generally to decorative assemblies for floral groupings and, more particularly, but not by way of limitation, to a decorative assembly for a floral grouping comprising a sheet of material disposed about a floral holding material with a crimped portion formed in the sheet of material for cooperating to hold the sheet of material in position about the floral holding material to provide a decorative covering. The invention also relates to decorative coverings for flower pots and, more particularly, but not by way of limitation, to a decorative covering comprising a sheet of material extended about the flower pot with a band extended about a portion of the sheet of material and connected to the sheet of material for forming a crimped portion in the sheet of material for cooperating to hold the sheet of material in the position extended about the flower pot.

### BRIEF DESCRIPTION OF THE DRAWINGS

Figure 1 is a plan view of a sheet of material constructed in accordance with the present invention.

Figure 2 is a sectional view showing the sheet of material extended about a portion of a floral holding material with a crimped portion being formed in the sheet of material for cooperating to hold the sheet of material in the position extended about the floral grouping to provide a decorative covering in accordance with the present invention.

Figure 3 is a sectional view of a modified floral holding material showing the sheet of material of Figure 1 wrapped about the modified floral holding material to provide a decorative covering.

Figure 4 is a perspective view of yet another modified floral holding material.

Figure 5 is a sectional view of the modified floral holding material of Figure 4 showing the sheet of material disposed about a portion of the modified floral holding material with the crimped portion being formed and a portion of the sheet of material.

Figure 6 is a plan view of a modified sheet of material.

Figure 7 is a sectional view of a floral holding material with the sheet of material of Figure 6 disposed about a portion of the floral holding material and a modified crimped portion being formed in a portion of the sheet of material.

Figure 8 is a plan view of still another modified sheet of material.

Figure 9 is a sectional view of a floral holding material showing the sheet of material of Figure 8 disposed about a portion of the floral holding material with the crimped portion being formed in the sheet of material in a manner like that shown in Figure 7.

Figure 10 is a plan view of a band constructed in accordance with the present invention.

Figure 11 is a sectional view of a flower pot having the sheet of material of Figure 1 extended thereabout and the band of Figure 10 extended about the sheet of material in accordance with the present invention.

Figure 12 is a view similar to Figure 11, but showing a perspective view of the sheet of material extended about the flower pot with the band extended about a portion of the sheet of material.

Figure 13 is a plan view of a modified sheet of material having a modified band connected thereto.

### DESCRIPTION OF THE PREFERRED EMBODIMENTS

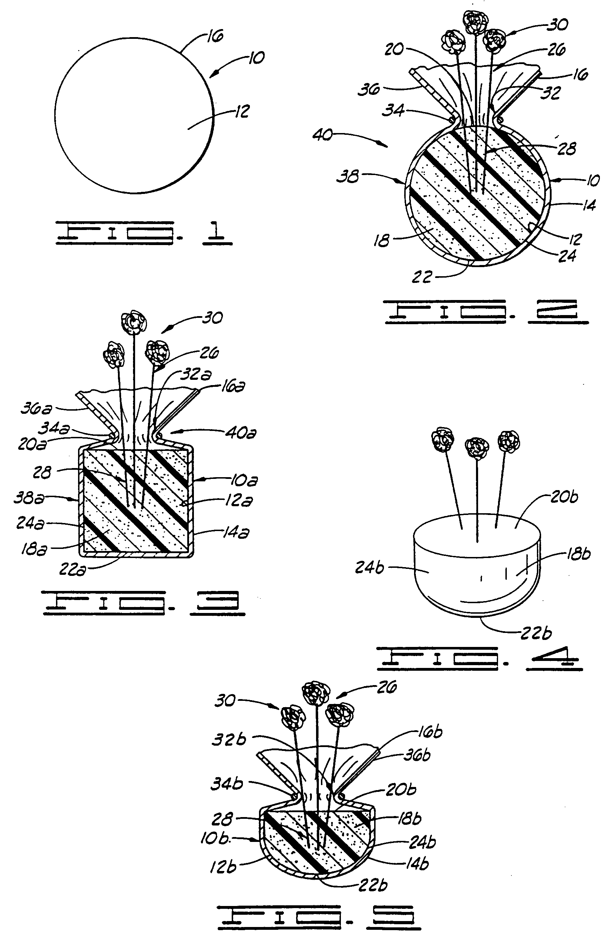

Shown in Figure 1 and designated therein by the general reference numeral 10 is a sheet of material constructed in accordance with the present invention. The sheet of material 10 has an upper surface 12, a lower surface 14, and an outer periphery 16.

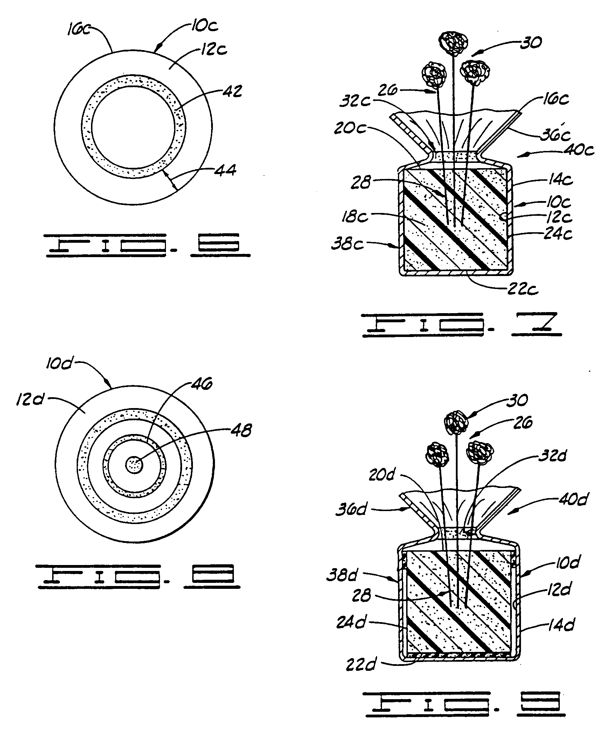

The sheet of material 10 is constructed from any suitable flexible material that is capable of being wrapped or formed or extended about a floral holding material 18 (Figure 2) or flower pot 118 (Figure 11) as described herein. Preferably, the sheet of material 10 is constructed of a material selected from a group of materials consisting of paper, metal foil, cloth (natural or synthetic or combinations thereof), denim, burlap, polymer film or cling material or combinations thereof.

The term "polymer film" as used herein means any polymer film. For example, but not by way of limitation, one polymer film is a polypropylene film. Another example of a polymer film, but not by way of limitation, is Cellophane® (registered trademark having the formula (C₆H₁₀O₅)ₓ, a substantially naturally occurring organic polymer).

The sheet of material 10 has a thickness in a range from about 0.1 mils (.00254 mm) to about 30 mils (.762 mm). Preferably, the sheet of material 10 has a thickness in a range from about 0.1 mils (.00254 mm) to about 5 mils (.127 mm).

The sheet of material 10 may be any shape, and a circular shape is shown in Figure 1 only by way of example. The sheet of material 10, for example, only may be square or rectangular or any other geometric shape such as heart shaped for example only.

The sheet of material 10 may be constructed of a single layer of material or a plurality of layers of the same or different types of materials. Any thickness of the sheet of material 10 may be utilized in accordance with the present invention as long as the sheet of material 10 is wrappable about the floral holding material 18 or flower pot 118, as described herein. Additionally, an insulating material such as bubble film, preferably as one of two or more layers, can be utilized in order to provide additional protection for the item wrapped therein. The layers of material comprising the sheet of material 10 may be connected together or laminated, or may be separate layers.

A decorative pattern, such as a color and/or an embossed pattern, and/or other decorative surface ornamentation may be applied to the upper surface 12 and/or the outer surface 14 of the sheet of material 10 or portions thereof including, but not limited to, printed design, coatings, colors, flocking or metallic finishes. The sheet of material 10 also may be totally or partially clear or tinted transparent material.

"Cling Wrap or Material" as used herein means any material which is capable of connecting to the sheet of material and/or itself upon contacting engagement during the wrapping process and is wrappable about an item whereby portions of the cling material contactingly engage and connect to other portions of the wrapping material for generally securing the sheet of material wrapped about at least a portion of the item. This connecting engagement is preferably temporary in that the wrapping material may be easily removed without tearing same, i.e., the cling material "clings" to the wrapping material. A wrapping material remains securely connected to and about the wrapped item until the wrapping material is torn therefrom.

The cling material is constructed and treated, if necessary, from polyethylene such as Cling Wrap made by Glad®, First Brands Corporation, Danbury, Connecticut. The thickness of the cling material will, in part, depend upon the thickness of the sheet of material utilized, i.e., generally, the thicker and therefore heavier sheet of material, may require a thicker and therefore stronger cling material. The cling material will range in thickness from less than about 0.2 mils (.00508 mm) to about 10 mils (.254 mm), and preferably less than about 0.5 mils (.0127 mm) to about 2.5 mils (.0635 mm) and most preferably from less than about 0.6 mils (.01524 mm) to about 2 mils (.0508 mm). However, any thickness of cling material may be utilized in accordance with the present invention which permits the cling material to function as described herein.

As shown in Figure 2, the floral holding material 18 has an upper end 20, a lower end 22 and an outer peripheral surface 24. The floral holding material 18 shown in Figure 2 is spherically shaped, although the floral holding material 18 may be any shape desired in any particular application. The floral holding material 18 is constructed of a material capable of receiving a portion of a floral grouping 26 and holding or supporting the floral grouping without any pot means such as a separate flower pot for example.

The floral holding means 18 may be the type of material commonly referred to in the art as floral foam or Oasis™ or may be soil or artificial soil or other earth composition so long as the material is capable of holding its predetermined shape and capable of receiving and supporting the floral grouping 26 without any additional pot means. The floral holding material 18 may be capable of receiving and holding water for supplying water to the floral grouping 26.

As shown in Figure 2, the floral grouping 26 has a stem end 28 and a bloom end 30. A portion of the stem end 28 of the floral grouping 26 is extended into the floral holding material 18. The bloom end 30 of the floral grouping 26 extends a distance above the floral holding material 18.

"Floral grouping" as used herein means cut fresh flowers, artificial flowers, a single flower, other fresh and/or artificial plants or other floral materials and may include other secondary plants and/or ornamentation which add to the aesthetics of the overall floral grouping.

As mentioned before, the floral holding material 18, as shown in Figure 2, is generally spherically shaped. A flat portion (not shown) may be formed on the lower end 20 of the floral holding material 18 so that the floral holding material 18 may be supported more easily on a flat surface such as on a table (not shown) for example.

The sheet of material 10 is disposed adjacent the floral holding material 18 with the upper surface 12 of the sheet of material 10 being disposed adjacent the outer peripheral surface 24 of the floral holding material 18. In this position, as shown in Figure 2, the sheet of material 10 is extended about and covers a substantial portion of the floral holding material 18 leaving the upper end 20 of the floral holding material 18 substantially uncovered so that the floral grouping 26 extends outwardly from the upper end 20 of the floral holding material 18.

In this position, a crimped portion 32 is formed in the sheet of material 10 near the upper end 20 of the floral holding material 18. The crimped portion 32 is formed by crimping together portions of the sheet of material to form the crimped portion 32. The crimped portion 32 extends a distance inwardly toward a central portion of the floral holding material 18. The crimped portion 32 preferably extends circumferentially about the upper end 20 of the floral holding material 18, although the crimped portion 32 could be formed only in portions of the sheet of material 18 thereby forming circumferentially spaced apart crimped portions if desired in a particular application.

As shown in Figure 2, the crimped portion 32 is formed by placing a band 34 about a portion of the sheet of material 10 with the band 34 gathering or bringing together portions of the sheet of material 10 pulling portions of the sheet of material 10 toward a central portion of the upper end 20 of the floral holding material 18 to form the crimped portion 32.

The term "band" as used herein means any material which may be secured about an object such as the flower pot 16 such bands commonly being referred to as elastic bands or rubber bands and also includes any other type of material such as a string or elastic piece of material, non-elastic piece of material, a round piece of material, a flat piece of material, a ribbon, a piece of paper strip, a piece of plastic strip, a piece of wire, a tie wrap or a twist tie or combinations thereof or any other device capable of gathering the sheet of material 10 to removably or substantially permanently form the crimped portion 32 and secure the crimped portion 32 formed in the sheet of material 10. The band 12 also may include a bow if desired in a particular application.

A portion of the sheet of material 10 near the outer periphery 16 thereof extends a distance above and beyond the crimped portion 32 to form a skirt 36 (Figure 2) extending circumferentially about the upper end 20 of the floral holding material 18 and circumferentially about the floral grouping 26. The sheet of material 10 secured about the floral holding material 18 in the manner just described provides a decorative covering 38. The sheet of material 10 and the floral holding material 18 together with the means for forming the crimped portion 32 comprise a decorative assembly 40.

In one preferred embodiment, the band 12 is automatically placed about the sheet of material 10 using any one of a number of commercially available automatic or semi automatic banding machines such as the automatic shaping machine Model No. Power 260 available from Clements Industries, Inc., South Hackensack, New Jersey, or the machine Model No. Model BMNS Side Bender available from Saxmayer Corporation, Blissfield, Minnesota (MN), for example. In this last mentioned embodiment, the floral holding material 18 with the sheet of material 10 extended thereabout is placed in the banding machine and the banding machine is activated to automatically place the band 34 about the sheet of material 10.

A system for automatically placing a band about a sheet of material disposed about a flower pot is disclosed in co-pending application entitled "BAND APPLICATOR FOR APPLYING A BAND ABOUT A SHEET OF MATERIAL AND A POT" and assigned to the assignee of the present invention and one disclosure of the letters application specifically is incorporated herein by reference. This system can be utilized for automatically placing the band 34 about the sheet of material 10 in accordance with the present invention.

In one other embodiment, the sheet of material 10 is placed about the floral holding material 18 and then placed in a holding device of the type disclosed in copending patent application entitled "METHOD AND APPARATUS FOR WRAPPING A FLORAL GROUPING WITH WATER HOLDING AND RELEASING MATERIAL", and assigned to the assignee of the present invention, the disclosure of which specifically hereby is incorporated herein by reference. This device includes a band holder. After the floral holding material 18 with the sheet of material 10 extended thereabout is placed in the holding device, the operator then takes a band from the band holder and pulls it over the holding device and onto the sheet of material 10.

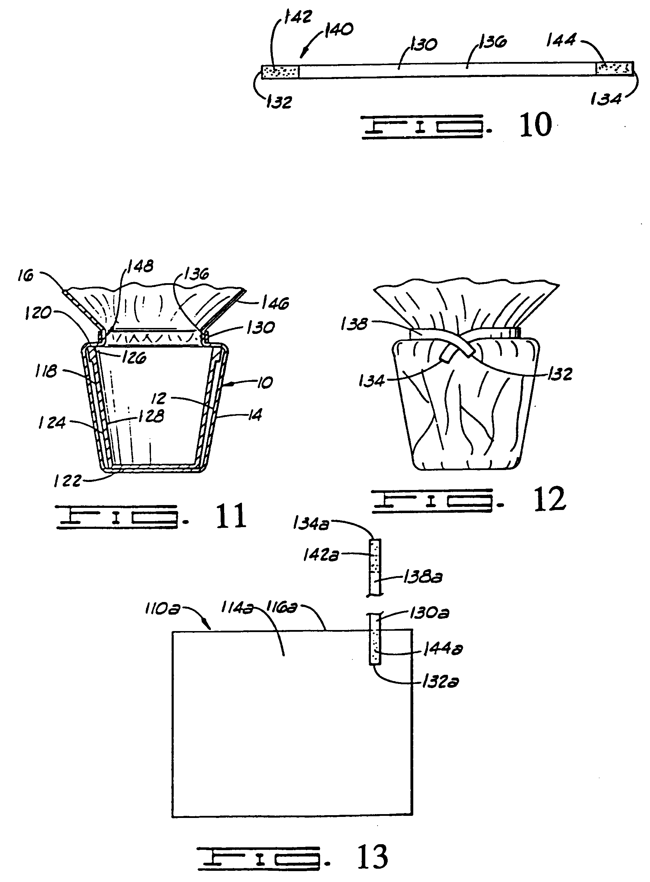

### EMBODIMENT OF FIGURE 3

Shown in Figure 3 is a modified decorative assembly 40a comprising the sheet of material 10a wrapped about a modified floral holding material 18a. The floral holding material 18a is constructed exactly like the floral holding material 18 shown in Figure 2 and described in detail before, except the floral holding material 18a has a generally rectangularly shaped cross section as compared to the circular shaped cross section shown in Figure 2 with respect to the floral holding material 18.

The sheet of material 10a is constructed exactly like the sheet of material 10 except the sheet of material 10a may be rectangularly shaped.

The sheet of material 10a is extended about the floral holding material 18a and the crimped portion 32a is formed in the sheet of material via the band 34a in a manner exactly like that described before in connection with the sheet of material and the floral holding material 18 shown in Figure 2.

### EMBODIMENT OF FIGURES 4 AND 5

Shown in Figure 4 is a modified floral holding material 18b which is constructed exactly like the floral holding material 18 shown in Figure 2 and described in detail before, except the floral holding material 18b is in the shape of a solid basket.

Shown in Figure 5 is a sheet of material 10b which is constructed exactly like the sheet of material 10 shown in Figure 1 and described in detail before, except the sheet of material 10b is disposed or extended about the floral holding material 18b. A crimped portion 32b is formed in the sheet of material 10b via a band 34b for cooperating to hold the sheet of material 10b in position about the floral holding material 18b to provide the decorative covering 38b.

The decorative assembly 40b is constructed and operates exactly like the decorative assembly 40 shown in Figures 1 and 2 and described in detail before, except the sheet of material 10b is extended about the floral holding material 18b having a basket like shape as opposed to a spherical shape or rectangularly shaped cross section like the floral holding material 18 or 18a shown in Figures 2 and 3 respectively.

### EMBODIMENT OF FIGURES 6 AND 7

Shown in Figure 6 is a modified sheet of material 10c which is constructed exactly like the sheet of material 10 shown in Figure 1 and described in detail before, except the sheet of material 10c has a closure bonding material 42 disposed thereon. More particularly, the closure bonding material 42 is disposed on the upper surface 12c of the sheet of material 10c and the closure bonding material 42 is spaced a distance 44 from the outer periphery 16c of the sheet of material 10c. The closure bonding material 42 extends circumferentially about the sheet of material 10c. The closure bonding material 42 is spaced a distance radially from a central portion of the sheet of material 10c. It should be noted that, although the closure bonding material 42 is shown in Figure 6 in the form of a continuous strip of closure bonding material 42, the closure bonding material 42 may be in the form of spots or spaced apart strips and the spots or strips may be of any geometric shape desired in a particular application.

The term "bonding material" as used herein means an adhesive, preferably a pressure sensitive adhesive, or a cohesive. Where the bonding material is a cohesive, a similar cohesive material must be placed on the adjacent surface for bondingly contacting and bondingly engaging with the cohesive material. The term "bonding material" also includes materials which are heat sealable and, in this instance, the adjacent portions of the material must be brought into contact and then heat must be applied to effect the seal. The term "bonding material" as used herein also means a heat sealing lacquer which may be applied to the sheet of material and, in this instance, heat also must be applied to effect the sealing. The term "bonding material" as used herein means any type of material or thing which can be used to effect the bonding or connecting of the two adjacent portions of the material or sheet of material to effect the connection or bonding described herein.

Shown in Figure 7 is a floral holding material 18c which is constructed exactly like the floral holding material 18a shown in Figure 3 and described in detail before.

In operation, the sheet of material 10c is extended about a portion of the outer peripheral surface 24c of the floral holding material 18c. The crimped portion 42c is formed in the sheet of material 10c by crimping together portions of the sheet of material 10c near the closure bonding material 42 and forming overlapping portions of the sheet of material with the overlapping portions being substantially bonded via the closure bonding material 42 to form the crimped portion 32c. The crimped portion 32c will cooperate to hold the sheet of material 10c about the floral holding material 18c to provide the decorative covering 38c in a manner exactly like that described before with respect to the crimped portion 32 formed with the band 34 shown in Figure 2, except in this instance the crimped portion 32 is formed by bringing together and bonding portions of the sheet of material 10c via the closure bonding material 42. The closure bonding material 42 is positioned on the upper surface 12c of the sheet of material 10c so that the crimped portion 32c is positioned above the upper end 20c of the floral holding material 18c, shown in Figure 7.

The crimping of the sheet of material 10c may be accomplished by hand or with a machine or device.

### EMBODIMENT OF FIGURES 8 AND 9

Shown in Figure 8 is a modified sheet of material 10d which is constructed exactly like the sheet of material 10c shown in Figure 6, except the sheet of material 10d also includes a first pot bonding material 46 which extends circumferentially about a portion of the sheet of material 10d. The first pot bonding material 46 is spaced a distance from the closure bonding material 42 and spaced a distance from a central portion of the sheet of material 10d. The sheet of material 10d also includes a second pot bonding material which is disposed on the upper surface 12d of the sheet of material 10d with the second pot bonding material 48 covering a central portion of the sheet of material 10d.

Shown in Figure 9 is a sectional view of a floral holding material 18d which is constructed exactly like the floral holding material 18a shown in Figure 3 and described in detail before. The sheet of material 10d is extended about the floral holding material 18d and the crimped portion 32d is formed in the sheet of material 10d in a manner exactly like that described before in connection with the sheet of material 10c shown in Figure 7.

The first pot bonding material 46 is disposed on the sheet of material 10d and positioned thereon so that, when the sheet of material 10d is wrapped or extended about the floral holding material 18d, the first pot bonding material 46 is disposed adjacent a portion of the outer peripheral surface 24d near the upper end 20d of the floral holding material 18b. The portion of the sheet of material 10d with the pot bonding material 46 thereon is bondingly connected to the outer peripheral surface 24d of the floral holding material 18d for further cooperating to hold the sheet of material 10d extended about the floral holding material 18d. In addition, the second pot bonding material 48 is positioned on the sheet of material 10d so that the second pot bonding material 48 engages a portion of the lower end 22d of the floral holding material 18d and bondingly connected thereto for still further cooperating to hold the sheet of material 10d extended about the floral holding material 18d to form the decorative covering 38d.

The closure bonding material 42 and the pot bonding materials 46 and 48 may be disposed on the upper surface or the lower surface or both of the sheets of material 10 described herein or in any of the other positions described in the co-pending application entitled "METHOD AND APPARATUS FOR FORMING A DECORATIVE COVER", owned by the Assignee of the present invention, the disclosure of which specifically hereby is incorporated herein by reference.

The present invention particularly is useful for providing a decorative covering using a sheet of material constructed of a material which is non-shape sustaining. Non-shape sustaining means that the material may be shaped about the form of the floral holding material, but the sheet of material will not hold that shape and will relax back into substantially the non-formed shape unless held in the formed shaped by some means such as the forming of the crimped portion in the sheet of material. By comparison, a shape sustaining sheet of material would be a material such as a metal foil for example which may be formed about the floral holding material and which will substantially maintain the formed shape.

A flower pot 118, as shown in Figure 11, has an upper end 120, a lower end 122 and an outer peripheral surface 124. A pot opening 126 is formed through the upper end 120 thereof and the pot opening 126 extends a distance through the flower pot 118 forming an inner peripheral surface 128. The flower pot 118 may be constructed in any manner now known or hereafter known. The flower pot 118 is capable of holding growing medium and a floral grouping in any manner commonly known in the art. The flower pot 118 for example may hold earth and a potted plant or flower. The flower pot 118 may also hold water and cut flowers in a manner similar to that commonly associated with a vase. Although the term "flower pot" is used herein it should be understood that the flower pot 118 may be a conventional flower pot or may be what is commonly referred to in the art as a vase or any other device for holding a floral grouping.

Shown in Figure 10 is a band 130 constructed in accordance with the present invention. The band 130 has a first end 132 and a second end 134. The band 130 is an elongated, flat strip of flexible material having a rectangularly shaped cross section (Figure 11). The band 130 preferably is constructed of any material capable of being wrapped about a portion of the sheet of material 10 in the manner described herein. Preferably the band 130 is constructed of a material selected from a group of materials consisting of paper, metal foil, cloth (natural or synthetic), denim, burlap, polymer film or cling material or combinations thereof. The band 130 has a thickness in a range from about 0.1 mils (.00254 mm) to about 30 mils (.762 mm). Preferably, the band 130 has a thickness in a range from about 0.1 mils (.00254 mm) to about 5.0 mils (.127 mm). In one preferred embodiment, the band 130 is constructed of the same material as the material utilized to construct the sheet of material. The band preferably is constructed of a sheet of flexible material.

As shown in Figure 10, the band 130 has an upper surface 136 and a lower surface 138 (Figure 12). A bonding material 140 is disposed on the upper surface 136 of the band 130. More particularly, a first bonding material 142 is disposed on the upper surface 136 of the band 130 near the first end 132. A second bonding material 144 is disposed on the upper surface 136 of the band 130 near the second end 134 of the band 130.

The term "bonding material" as used herein includes any type of material or thing which can be used to effect the bonding or connecting of the band 130 to either a portion of the band 130 or a portion of the sheet of material 10 or both.

In operation, the sheet of material 10 is extended about the outer peripheral surface 124 of the flower pot 118, as shown in Figures 11 and 12. The upper surface 12 of the sheet of material 10 is disposed adjacent the outer peripheral surface 124 of the flower pot 118. A portion of the sheet of material 10 near the outer periphery 16 thereof extends a distance above the upper end 120 of the flower pot 118 to form a skirt portion 146 extending above the upper end 120 of the flower pot 118.

With the sheet of material 10 extended about the outer peripheral surface 124 of the flower pot 118, the first end 132 of the band 130 is bondingly connected to a portion of the sheet of material 10 by disposing the upper surface 136 of the band 130 near the first end 132 thereof adjacent a portion of the outer surface 14 of the sheet of material 10 and bondingly connecting the first end 132 of the band 130 to the sheet of material 10 via the first bonding material 142. The band 130 then is extended about a portion of the sheet of material 10 pulling or drawing the sheet of material 10 inwardly toward a central portion of the pot opening 126 and forming a crimped portion 148 (Figure 11) in the sheet of material 10. The second end 134 of the band 130 then is bondingly connected to either a portion of the band 130 or a portion of the sheet of material 10 by disposing the second bonding material 144 adjacent either a portion of the band 130 or a portion of the outer surface 14 of the sheet of material 10 for bondingly connecting the second end 134 of the band 130 to either the band 130 or the sheet of material 10.

The crimped portion 148 extends circumferentially about the upper end 120 of the flower pot 118. Preferably, the band 130 is placed about the sheet of material 10 in a position where the crimped portion 148 is formed and positioned above the upper end 120 of the flower pot 118 with the crimped portion 148 extending circumferentially about the upper end 120 of the flower pot 118. The crimped portion 148 cooperates to hold the sheet of material 10 in the position extended about the outer peripheral surface 124 of the flower pot 118 to provide the decorative covering. The band 130 is secured to the sheet of material 10 and/or the portions of the band 130 to hold the band 130 in the position extending about a portion of the sheet of material 10 and forming the crimped portion 148.

### EMBODIMENT OF FIGURE 13

Shown in Figure 13 is a modified sheet of material 110a which is constructed exactly like the sheet of material 10 shown in Figure 1 and described in detail before, except the sheet of material 110a is generally rectangularly shaped. Also shown in Figure 13 is a modified band 130a which is constructed exactly like the band 130 shown in Figure 10 and described in detail before, except the first end of the band 130 is secured to the sheet of material via the bonding material 142a prior to the sheet of material 110a being wrapped about the flower pot. It should be noted that the band 130a may be integrally formed with the sheet of material rather than securing the band 130a to the sheet of material via the first bonding material 142a if desired in a particular application.

The sheet of material 110a and band 130a will operate in the manner described before in connection with the sheet of material 10 in the band 130 shown in Figures 1 and 10-12, except the first end 132a of the band 130 already is connected to the sheet of material 110a prior to wrapping the sheet of material 110a about the flower pot 118. Thus, when the sheet of material 110a is wrapped or extended about the flower pot 118, the band 130a already is in position to be wrapped about a portion of the sheet of material and secured to the sheet of material 110a or a portion of the band 130 to form the crimped portion in a manner like that described before in connection with the crimped portion 148. In this embodiment, the band 130 extends a distance beyond the outer periphery 116a of the sheet of material 110a prior to the sheet of material 110a being formed about the flower pot.

Changes may be made in the construction and the operation of the various components, elements and assemblies described herein and changes may be made in the steps or the sequence of steps of the methods described herein without departing from the spirit and scope of the invention as defined in the following claims.

## Claims

1. A decorative assembly for a floral grouping, comprising:
a floral holding material having an upper end, a lower end and an outer peripheral surface, the floral holding material being constructed of a material capable of receiving a portion of the floral grouping and supporting the floral grouping without any pot means;
a sheet of material having an upper surface, a lower surface and an outer periphery, the upper surface of the sheet of material being disposed adjacent a portion of the outer peripheral surface of the floral holding material and the sheet of material extending about a portion of the outer peripheral surface of the floral holding material; and
means for forming a crimped portion in the sheet of material with the crimped portion cooperating to hold the sheet of material in the position extended about the floral holding material to provide a decorative covering.

2. The decorative assembly of claim 1 wherein the crimped portion is defined further as being disposed near the upper end of the floral holding material.

3. The decorative assembly of claim 1 wherein the crimped portion is defined further as being disposed above the upper end of the floral holding material.

4. The decorative assembly of claim 1 wherein the crimped portion is defined further as being disposed above the upper end of the floral holding material, with the crimped portion extending the distance radially inwardly toward a central portion of the floral holding material and the crimped portion extending circumferentially about the upper end of the floral holding material.

5. The decorative assembly of claim 1 wherein the means for forming the crimped portion is defined further as comprising:
a band disposed about the sheet of material near the outer periphery of the sheet of material for pulling the sheet of material inwardly toward a central portion of the floral holding material and forming the crimped portion in the sheet of material.

6. The decorative assembly of claim 1 wherein the means for forming the crimped portion further comprises a closure bonding material disposed on the sheet of material with the portions of the sheet of material near the closure bonding material being crimped together and forming overlapping portions of the sheet of material with the overlapping portions being substantially bonded via the closure bonding material to form the crimped portion.

7. The decorative assembly of claim 1 wherein the sheet of material further comprises a pot bonding material disposed on the portion thereof for bondingly engaging portions of the outer peripheral surface of the floral holding material for cooperating to hold the sheet of material in position extended about the outer peripheral surface of the floral holding material.

8. The decorative assembly of claim 7 wherein the pot bonding material is further defined as being disposed on the sheet of material for engaging portions of the outer peripheral surface of the floral holding material near the upper end of the floral holding material and bondingly connecting portions of the sheet of material to the outer peripheral surface of the floral holding material for cooperating to hold the sheet of material in position extended about the floral holding material to provide the decorative covering.

9. The decorative assembly of claim 7 wherein the pot bonding material is further defined as being disposed on the sheet of material and positioned thereon to engage a portion of the floral holding material near the lower end of the floral holding material for bondingly connecting a portion of the sheet of material to the floral holding material thereby cooperating to hold the sheet of material in position extended about the floral holding material to provide the decorative covering.

10. The decorative assembly of claim 1 wherein the floral holding material is defined further as receiving a portion of the floral grouping and supporting the floral grouping in a position extending a distance above the upper end of the floral holding material.

11. The decorative assembly of claim 1 wherein the floral grouping is defined further as having a stem end and a bloom end, and wherein the floral holding material is defined further as receiving a portion of the stem end of the floral grouping and supporting the floral grouping with a portion of a floral grouping near the bloom end thereof extending a distance above the upper end of the floral holding material.

12. The decorative assembly of claim 1 wherein the sheet of material is defined further as being constructed of a material selected from a group of materials consisting of a material selected from a group of materials consisting of paper, metal foil, cloth (natural or synthetic), denim, burlap or polymer film or combinations thereof.

13. The decorative assembly of claim 12 wherein the sheet of material is defined further as having a thickness in a range from less than about 0.1 mils (.00254 mm) to about 30 mils (.762 mm).

14. The decorative assembly of claim 1 wherein the sheet of material is defined further as being a non-shape sustaining material.

15. A decorative assembly comprising:
a floral grouping having a bloom end and a stem end;
a floral holding material having an upper end, a lower end and an outer peripheral surface, the floral holding material being constructed of a material capable of receiving a portion of the floral grouping and supporting the floral grouping without any pot means, the stem end of the floral grouping being disposed in the floral holding material and the floral holding material supporting the floral grouping with a portion of the floral grouping near the bloom end thereof extending a distance upwardly beyond the upper end of the floral holding material;
a sheet of material having an upper surface, a lower surface and an outer periphery, the upper surface of the sheet of material being disposed adjacent a portion of the outer peripheral surface of the floral holding material and the sheet of material extending about a portion of the outer peripheral surface of the floral holding material, the sheet of material extending about the outer peripheral surface of the floral holding material and leaving uncovered a portion of the floral holding material near the upper end thereof uncovered whereby the floral grouping extends upwardly beyond the upper end of the floral holding material and above the sheet of material; and
means for forming a crimped portion in the sheet of material with the crimped portion cooperating to hold the sheet of material in the position extended about the floral holding material to provide a decorative covering, the crimped portion being formed in the sheet of material near the upper end of the floral holding material and the crimped portion engaging a portion of the floral holding material for cooperating to hold the sheet of material in the position extended about the floral holding material to provide a decorative covering.

16. The decorative assembly of claim 15 wherein the crimped portion is defined further as being disposed near the upper end of the floral holding material.

17. The decorative assembly of claim 15 wherein the crimped portion is defined further as being disposed above the upper end of the floral holding material.

18. The decorative assembly of claim 15 wherein the crimped portion is defined further as being disposed above the upper end of the floral holding material, with the crimped portion extending the distance radially inwardly toward a central portion of the floral holding material and the crimped portion extending circumferentially about the upper end of the floral holding material.

19. The decorative assembly of claim 15 wherein the means for forming the crimped portion is defined further as comprising:
a band disposed about the sheet of material near the outer periphery of the sheet of material for pulling the sheet of material inwardly toward a central portion of the floral holding material and forming the crimped portion in the sheet of material.

20. The decorative assembly of claim 15 wherein the means for forming the crimped portion further comprises a closure bonding material disposed on the sheet of material with the portions of the sheet of material near the closure bonding material being crimped together and forming overlapping portions of the sheet of material with the overlapping portions being substantially bonded via the closure bonding material to form the crimped portion.

21. The decorative assembly of claim 15 wherein the sheet of material further comprises a pot bonding material disposed on the portion thereof for bondingly engaging portions of the outer peripheral surface of the floral holding material for cooperating to hold the sheet of material in position extended about the outer peripheral surface of the floral holding material.

22. The decorative assembly of claim 21 wherein the pot bonding material is further defined as being disposed on the sheet of material for engaging portions of the outer peripheral surface of the floral holding material near the upper end of the floral holding material and bondingly connecting portions of the sheet of material to the outer peripheral surface of the floral holding material for cooperating to hold the sheet of material in position extended about the floral holding material to provide the decorative covering.

23. The decorative assembly of claim 22 wherein the pot bonding material is further defined as being disposed on the sheet of material and positioned thereon to engage a portion of the floral holding material near the lower end of the floral holding material for bondingly connecting a portion of the sheet of material to the floral holding material thereby cooperating to hold the sheet of material in position extended about the floral holding material to provide the decorative covering.

24. The decorative assembly of claim 15 wherein the floral holding material is defined further as receiving a portion of the floral grouping and supporting the floral grouping in a position extending a distance above the upper end of the floral holding material.

25. The decorative assembly of claim 15 wherein the floral grouping is defined further as having a stem end and a bloom end, and wherein the floral holding material is defined further as receiving a portion of the stem end of the floral grouping and supporting the floral grouping with a portion of a floral grouping near the bloom end thereof extending a distance above the upper end of the floral holding material.

26. The decorative assembly of claim 15 wherein the sheet of material is defined further as being constructed of a material selected from a group of materials consisting of paper, metal foil, cloth (natural or synthetic), denim, burlap or polymer film or combinations thereof.

27. The decorative assembly of claim 15 wherein the sheet of material is defined further as having a thickness in a range from less than about 0.1 mils to about 30 mils.

28. The decorative assembly of claim 15 wherein the sheet of material is defined further as being a non-shape sustaining material.

29. A method for providing a decorative covering comprising:
providing a floral grouping having a bloom end and a stem end;
providing a floral holding material having an upper end, a lower end and an outer peripheral surface, the floral holding material being constructed of a material capable of receiving a portion of the floral grouping and supporting the floral grouping without any pot means;
providing a sheet of material having an upper surface, a lower surface and an outer periphery;
disposing the stem end of the floral grouping in the floral holding material;
disposing the upper surface of the sheet of material near the outer peripheral surface of the floral holding material and extending the sheet of material about at least a portion of the outer peripheral surface of the floral holding material while leaving at least a portion of the upper end of the floral holding material uncovered, the upper surface of the sheet of material being disposed adjacent the outer peripheral surface of the floral holding material; and
crimping a portion of the sheet of material to form a crimped portion in the sheet of material with the crimped portion cooperating to hold the sheet of material in the position extended about the floral holding material to provide the decorative covering.

30. The method of claim 29 wherein the step of forming the crimped portion is defined further as forming the crimped portion near the upper end of the floral holding material.

31. The method of claim 29 wherein the step of forming the crimped portion is defined further as forming the crimped portion in the sheet of material at a position above the upper end of the floral holding material.

32. The method of claim 29 wherein the step of forming the crimped portion is defined further as forming the crimped portion in the sheet of material at a position above the upper end of the floral holding material with the crimped portion extending circumferentially about the upper end of the floral holding material and the crimped portion being engageable with a portion of the floral holding material for cooperating to hold the sheet of material in the position extended about the floral holding material to provide the decorative covering.

33. The method of claim 29 wherein the step of forming the crimped portion further comprises:
disposing a band about the sheet of material for pulling the sheet of material inwardly toward a central portion of the floral holding material and forming the crimped portion in the sheet of material.

34. The method of claim 29 wherein the step of providing the sheet of material further comprises providing the sheet of material with a closure bonding material being disposed on a portion of the sheet of material, and wherein the step of forming the crimped portion further comprises:
crimping a portion of the sheet of material near the closure bonding material and forming overlapping portions of the sheet of material with the overlapping portions being substantially bonded via the closure bonding material to form the crimped portion.

35. The method of claim 29 wherein the step of providing the sheet of material further comprises providing the sheet of material with a pot bonding material being disposed on the sheet of material, and wherein the step of forming the sheet of material about the floral holding material further comprises forming the sheet of material about the outer peripheral surface of the floral holding material with the pot bonding material bondingly engaging a portion of the floral holding material for bondingly connecting the sheet of material to the floral holding material.

36. The method of claim 29 wherein the step of providing the sheet of material further comprises providing the sheet of material constructed of a material selected from a group of materials consisting of paper, metal foil, cloth (natural or synthetic), denim, burlap or polymer film or combinations thereof.

37. The method of claim 36 wherein the step of providing the sheet of material further comprises providing the sheet of material having a thickness in a range from less than about 0.1 mils to about 30 mils.

38. The method of claim 29 wherein the step of providing the sheet of material further comprises providing the sheet of material constructed of a non-shape sustaining material.

39. A method for providing a decorative covering, comprising:
providing a floral grouping having a bloom end and a stem end;
providing a floral holding material having an upper end, a lower end and an outer peripheral surface, the floral holding material being constructed of a material capable of receiving a portion of the floral grouping and supporting the floral grouping without any pot means, the stem end of the floral grouping being disposed in the floral holding material and the floral holding material supporting the floral grouping with a portion of the floral grouping near the bloom end thereof extending a distance upwardly beyond the upper end of the floral holding material;
providing a sheet of material having an upper surface, a lower surface and an outer periphery;
disposing the stem end of the floral grouping in the floral holding material;
extending the sheet of material about the floral holding material with the upper surface of the sheet of material being disposed adjacent the outer peripheral surface of the floral holding material and the sheet of material covering a substantial portion of the outer peripheral surface of the floral holding material leaving a portion of the floral holding material near the upper end thereof uncovered whereby the floral grouping extends above the floral holding material and above the sheet of material a distance above the upper end of the floral holding material; and
forming a crimped portion in the sheet of material near the upper end of the floral holding material with the crimped portion being engageable with a portion of the floral holding material for cooperating to hold the sheet of material in the position extended about the floral holding material to provide the decorative covering.

40. The method of claim 39 wherein the step of forming the crimped portion is defined further as forming the crimped portion near the upper end of the floral holding material.

41. The method of claim 39 wherein the step of forming the crimped portion is defined further as forming the crimped portion in the sheet of material at a position above the upper end of the floral holding material.

42. The method of claim 39 wherein the step of forming the crimped portion is defined further as forming the crimped portion in the sheet of material at a position above the upper end of the floral holding material with the crimped portion extending circumferentially about the upper end of the floral holding material and the crimped portion being engageable with a portion of the floral holding material for cooperating to hold the sheet of material in the position extended about the floral holding material to provide the decorative covering.

43. The method of claim 39 wherein the step of forming the crimped portion further comprises:
disposing a band about the sheet of material for pulling the sheet of material inwardly toward a central portion of the floral holding material and forming the crimped portion in the sheet of material.

44. The method of claim 39 wherein the step of providing the sheet of material further comprises providing the sheet of material with a closure bonding material being disposed on a portion of the sheet of material, and wherein the step of forming the crimped portion further comprises:
crimping a portion of the sheet of material near the closure bonding material and forming overlapping portions of the sheet of material with the overlapping portions being substantially bonded via the closure bonding material to form the crimped portion.

45. The method of claim 39 wherein the step of providing the sheet of material further comprises providing the sheet of material with a pot bonding material being disposed on the sheet of material, and wherein the step of forming the sheet of material about the floral holding material further comprises forming the sheet of material about the outer peripheral surface of the floral holding material with the pot bonding material bondingly engaging a portion of the floral holding material for bondingly connecting the sheet of material to the floral holding material.

46. The method of claim 39 wherein the step of providing the sheet of material further comprises providing the sheet of material constructed of a material selected from a group of materials consisting of paper, metal foil, cloth (natural or synthetic), denim, burlap or polymer film or combinations thereof.

47. The method of claim 39 wherein the step of providing the sheet of material further comprises providing the sheet of material having a thickness in a range from less than about 0.1 mils to about 30 mils.

48. The method of claim 39 wherein the step of providing the sheet of material further comprises providing the sheet of material constructed of a non-shape sustaining material.

49. A method for providing a decorative covering comprising:
providing a floral holding material having an upper end, a lower end and an outer peripheral surface, the floral holding material being constructed of a material capable of receiving a portion of a floral grouping and supporting the floral grouping without any pot means, the floral grouping extending a distance from the upper end of the floral holding material;
providing a sheet of material having an upper surface, a lower surface and an outer periphery;
extending the sheet of material about at least a portion of the outer peripheral surface of the floral holding material while leaving at least a portion of the upper end of the floral holding material uncovered, the upper surface of the sheet of material being disposed adjacent the outer peripheral surface of the floral holding material; and
crimping automatically a portion of the sheet of material to form a crimped portion in the sheet of material with the crimped portion cooperating to hold the sheet of material in the position extended about the floral holding material to provide the decorative covering.

50. The method of claim 49 wherein the step of forming the crimped portion is defined further as forming the crimped portion near the upper end of the floral holding material.

51. The method of claim 49 wherein the step of forming the crimped portion is defined further as forming the crimped portion in the sheet of material at a position above the upper end of the floral holding material.

52. The method of claim 49 wherein the step of forming the crimped portion is defined further as forming the crimped portion in the sheet of material at a position above the upper end of the floral holding material with the crimped portion extending circumferentially about the upper end of the floral holding material and the crimped portion being engageable with a portion of the floral holding material for cooperating to hold the sheet of material in the position extended about the floral holding material to provide the decorative covering.

53. The method of claim 49 wherein the step of forming the crimped portion further comprises:
disposing automatically a band about the sheet of material for pulling the sheet of material inwardly toward a central portion of the floral holding material and forming the crimped portion in the sheet of material.

54. The method of claim 49 wherein the step of providing the sheet of material further comprises providing the sheet of material constructed of a material selected from a group of materials consisting of paper, metal foil, cloth (natural or synthetic), denim, burlap or polymer film or combinations thereof.

55. The method of claim 49 wherein the step of providing the sheet of material further comprises providing the sheet of material constructed of a non-shape sustaining material.

56. A decorative covering comprising:
a flower pot having an upper end, a lower end and an outer peripheral surface with a pot opening extending through the upper end and extending into the flower pot forming an inner peripheral surface;
a sheet of material having an upper surface, a lower surface and an outer periphery, the sheet of material being disposed about the outer peripheral surface of the flower pot, the upper surface of the sheet of material being disposed adjacent the outer peripheral surface of the flower pot; and
a band having a first end and a second end and a bonding material, the first end of the band being connected to the sheet of material via the bonding material and the band extending about a portion of the sheet of material after the sheet of material has been extended about the flower pot with the second end of the band being connected to either a portion of the sheet of material or a portion of the band via the bonding material to secure the band in the position extending about a portion of the sheet of material.

57. The decorative covering of claim 56 wherein the band is defined further as being substantially flat and having a generally rectangularly shaped cross section and being constructed of a flexible material.

58. The decorative covering of claim 56 wherein the sheet of material is defined further as extending about the outer peripheral surface of the flower pot with a portion of the sheet of material extending a distance above the upper end of the flower pot, and wherein the band is defined further as being disposed about a portion of the sheet of material extending above the upper end of the flower pot for forming the crimped portion in the sheet of material at a position above the upper end of the flower pot.

59. The decorative covering of claim 58 wherein the crimped portion is defined further as extending circumferentially about the upper end of the flower pot.

60. The decorative covering of claim 58 wherein the crimped portion is defined further as extending a distance radially inwardly toward a central portion of the pot opening, the crimped portion being engageable with a portion of the flower pot for cooperating to hold the sheet of material in the position extending about the outer peripheral surface of the flower pot.

61. The decorative covering of claim 56 wherein the sheet of material is defined further as being constructed of a material selected from a group of materials consisting of paper, metal foil, cloth (natural or synthetic), denim, burlap, polymer film or cling material or combinations thereof.

62. The decorative covering of claim 61 wherein the band is defined further as being constructed of a material selected from a group of materials consisting of paper, metal foil, cloth (natural or synthetic), denim, burlap, polymer film or cling material or combinations thereof.

63. The decorative covering of claim 62 wherein the band is defined further as having a thickness in a range from about 0.1 mils to about 30 mils.

64. The decorative covering of claim 62 wherein the band is defined further as having a thickness in a range from about 0.1 mils to about 5 mils.

65. The decorative covering of claim 56 wherein the band is defined further as having an upper surface and a lower surface, and wherein the bonding material comprises a first bonding material being disposed on the upper surface of the band near the first end thereof and a second bonding material being disposed on the upper surface of the band near the second end thereof, the first bonding material being bondingly connected to a portion of the lower surface of the sheet of material and the second bonding material being bondingly connected to either a portion of the band or a portion of the lower surface of the sheet of material for securing the band in the position extended about the portion of the sheet of material.

66. The decorative covering of claim 56 wherein the band is defined further as being integrally formed with the sheet of material and the second end of the band is defined further as extending a distance from the outer periphery of the sheet of material.

67. A decorative covering for use with a flower pot having an upper end, a lower end and an outer peripheral surface with a pot opening extending through the upper end thereof and extending into the flower pot for forming an inner peripheral surface, the decorative covering comprising:
a sheet of material having an upper surface, a lower surface and an outer periphery, the sheet of material being disposed about the outer peripheral surface of the flower pot, the upper surface of the sheet of material being disposed adjacent the outer peripheral surface of the flower pot; and
a band having a first end and a second end and a bonding material, the first end of the band being connected to the sheet of material via the bonding material and the band extending about a portion of the sheet of material after the sheet of material has been extended about the flower pot with the second end of the band being connected to either a portion of the sheet of material or a portion of the band via the bonding material to secure the band in the position extending about a portion of the sheet of material.

68. The decorative covering of claim 67 wherein the band is defined further as being substantially flat and having a generally rectangularly shaped cross section and being constructed of a flexible material.

69. The decorative covering of claim 67 wherein the sheet of material is defined further as extending about the outer peripheral surface of the flower pot with a portion of the sheet of material extending a distance above the upper end of the flower pot, and wherein the band is defined further as being disposed about a portion of the sheet of material extending above the upper end of the flower pot for forming the crimped portion in the sheet of material at a position above the upper end of the flower pot.

70. The decorative covering of claim 69 wherein the crimped portion is defined further as extending circumferentially about the upper end of the flower pot.

71. The decorative covering of claim 67 wherein the crimped portion is defined further as extending a distance radially inwardly toward a central portion of the pot opening, the crimped portion being engageable with a portion of the flower pot for cooperating to hold the sheet of material in the position extending about the outer peripheral surface of the flower pot.

72. The decorative covering of claim 67 wherein the sheet of material is defined further as being constructed of a material selected from a group of materials consisting of paper, metal foil, cloth (natural or synthetic), denim, burlap, polymer film or cling material or combinations thereof.

73. The decorative covering of claim 72 wherein the band is defined further as being constructed of a material selected from a group of materials consisting of paper, metal foil, cloth (natural or synthetic), denim, burlap, polymer film or cling material or combinations thereof.

74. The decorative covering of claim 73 wherein the band is defined further as having a thickness in a range from about 0.1 mils to about 30 mils.

75. The decorative covering of claim 73 wherein the band is defined further as having a thickness in a range from about 0.1 mils to about 5 mils.

76. The decorative covering of claim 67 wherein the band is defined further as having an upper surface and a lower surface and wherein the bonding material comprises a first bonding material being disposed on the upper surface of the band near the first end thereof and a second bonding material being disposed on the upper surface of the band near the second end thereof, the first bonding material being bondingly connected to a portion of the lower surface of the sheet of material and the second bonding material being bondingly connected to either a portion of the band or a portion of the lower surface of the sheet of material for securing the band in the position extended about the portion of the sheet of material.

77. The decorative covering of claim 67 wherein the band is defined further as being integrally formed with the sheet of material and the second end of the band is defined further as extending a distance from the outer periphery of the sheet of material.

78. A decorative covering for use with a flower pot having an upper end, a lower end and an outer peripheral surface with a pot opening extending through the upper end thereof and extending into the flower pot for forming an inner peripheral surface, the decorative covering comprising:
a sheet of material having an upper surface, a lower surface and an outer periphery, the sheet of material being disposed about the outer peripheral surface of the flower pot and a portion of the sheet of material extending a distance above the upper end of the flower pot, the upper surface of the sheet of material being disposed adjacent the outer peripheral surface of the flower pot; and
a band having a first end and a second end and a bonding material, the first end of the band being connected to the sheet of material via the bonding material and the band extending about a portion of the sheet of material after the sheet of material has been positioned about the flower pot and at a position above the upper end of the flower pot with the second end of the band being connected either to a portion of the band or to a portion of the sheet of material via the bonding material securing the band in the position extending about a portion of the sheet of material and for forming a crimped portion in the sheet of material above the upper end of the flower pot with the crimped portion being engageable with a portion of the flower pot for cooperating to hold the sheet of material in the position extending about the flower pot to provide the decorative covering.

79. The decorative covering of claim 78 wherein the band is defined further as being substantially flat and having a generally rectangularly shaped cross section and being constructed of a flexible material.

80. The decorative covering of claim 78 wherein the crimped portion is defined further as extending circumferentially about the upper end of the flower pot.

81. The decorative covering of claim 80 wherein the crimped portion is defined further as extending a distance radially inwardly toward a central portion of the pot opening, the crimped portion being engageable with a portion of the flower pot for cooperating to hold the sheet of material in the position extending about the outer peripheral surface of the flower pot.

82. The decorative covering of claim 78 wherein the sheet of material is defined further as being constructed of a material selected from a group of materials consisting of paper, metal foil, cloth (natural or synthetic), denim, burlap, polymer film or cling material or combinations thereof.

83. The decorative covering of claim 82 wherein the band is defined further as being constructed of a material selected from a group of materials consisting of paper, metal foil, cloth (natural or synthetic), denim, burlap, polymer film or cling material or combinations thereof.

84. The decorative covering of claim 83 wherein the band is defined further as having a thickness in a range from about 0.1 mils (.00254 mm) to about 30 mils (.762 mm).

85. The decorative covering of claim 83 wherein the band is defined further as having a thickness in a range from about 0.1 mils (.00254 mm) to about 5 mils (.127 mm).

86. The decorative covering of claim 78 wherein the band is defined further as having an upper surface and a lower surface and wherein the bonding material comprises a first bonding material being disposed on the upper surface of the band near the first end thereof and a second bonding material being disposed on the upper surface of the band near the second end thereof, the first bonding material being bondingly connected to a portion of the lower surface of the sheet of material and the second bonding material being bondingly connected to either a portion of the band or a portion of the upper surface of the sheet of material for securing the band in the position extended about the portion of the sheet of material.

87. The decorative covering of claim 78 wherein the band is defined further as being integrally formed with the sheet of material and the second end of the band is defined further as extending a distance from the outer periphery of the sheet of material.

88. A method for providing a decorative covering for use with a flower pot having an upper end, a lower end, an outer peripheral surface and a pot opening extending through the upper end thereof and extending into the flower pot forming an inner peripheral surface, comprising:
providing a sheet of material having an upper surface, a lower surface and an outer periphery;
providing a band having a first end and a second end and a bonding material;
extending the sheet of material about the outer peripheral surface of the flower pot with the upper surface of the sheet of material being disposed about adjacent the outer peripheral surface of the flower pot and with a portion of the sheet of material extending above the upper end of the flower pot; and
connecting the first end of the band to the sheet of material via the bonding material and extending the band about the portion of the sheet of material extending above the upper end of the flower pot and pulling a portion of the sheet of material inwardly forming a crimped portion in the sheet of material at a position above the upper end of the flower pot and connecting the second end of the band to either a portion of the band or a portion of the sheet of material via the bonding material for securing the band in the position extending about the portion of the sheet of material, the crimped portion being engageable with the upper end of the flower pot for cooperating to hold the sheet of material in the position extending about the flower pot to provide the decorative covering.

89. The method of claim 88 wherein the step of providing the band is defined further as providing the band constructed of a flexible material selected from a group of materials consisting of paper, metal foil, cloth (natural or synthetic), denim, burlap, polymer film or cling material or combinations thereof.

90. The method of claim 88 wherein the step of providing the band is defined further as providing the band having a thickness in a range from about 0.1 mils (.00254 mm) to about 30 mils (.762 mm).

91. The method of claim 90 wherein the step of providing the band is defined further as providing the band having a thickness in a range from about 0.1 mils (.00254 mm) to about 5 mils (.127 mm).

92. The method of claim 88 wherein the step of extending the band about the portion of the sheet of material and forming the crimped portion is defined further as forming the crimped portion extending radially inwardly toward a central portion of the flower pot opening with the crimped portion extending circumferentially about the pot opening.

93. A method comprising:
providing a flower pot having an upper end, a lower end, an outer peripheral surface and a pot opening extending through the upper end thereof and extending into the flower pot forming an inner peripheral surface;
providing band having a first end and a second end and a bonding material;
extending the sheet of material about the outer peripheral surface of the flower pot with the upper surface of the sheet of material being disposed about adjacent the outer peripheral surface of the flower pot and with a portion of the sheet of material extending above the upper end of the flower pot; and
connecting the first end of the band to the sheet of material via the bonding material and extending the band about the portion of the sheet of material extending above the upper end of the flower pot and pulling a portion of the sheet of material inwardly forming a crimped portion in the sheet of material at a position above the upper end of the flower pot and connecting the second end of the band to either a portion of the band or a portion of the sheet of material via the bonding material for securing the band in the position extending about the portion of the sheet of material, the crimped portion being engageable with the upper end of the flower pot for cooperating to hold the sheet of material in the position extending about the flower pot to provide the decorative covering.

94. The method of claim 93 wherein the step of providing the band is defined further as providing the band constructed of a flexible material selected from a group of materials consisting of paper, metal foil, cloth (natural or synthetic), denim, burlap, polymer film or cling material or combinations thereof.

95. The method of claim 93 wherein the step of providing the band is defined further as providing the band having a thickness in a range from about 0.1 mils (.00254 mm) to about 30 mils (.762 mm).

96. The method of claim 93 wherein the step of providing the band is defined further as providing the band having a thickness in a range from about 0.1 mils (.00254 mm) to about 5 mils (.127 mm).

97. The method of claim 93 wherein the step of extending the band about the portion of the sheet of material and forming the crimped portion is defined further as forming the crimped portion extending radially inwardly toward a central portion of the flower pot opening with the crimped portion extending circumferentially about the pot opening.

98. A method comprising:
providing a flower pot having an upper end, a lower end, an outer peripheral surface and a pot opening extending through the upper end thereof and extending into the flower pot forming an inner peripheral surface;
providing a sheet of material having an upper surface, a lower surface and an outer periphery;
providing a band having a first end and a second end and a bonding material; and
extending the sheet of material about at least a portion of the outer peripheral surface of the flower pot; and
connecting the first end of the band to the sheet of material via the bonding material and extending the band about a portion of the sheet of material and connecting the second end of the band to either a portion of the band or a portion of the sheet of material via the bonding material for securing the band in the position extending about the sheet of material.

99. The method of claim 98 wherein the step of providing the band is defined further as providing the band having a thickness in a range from about 0.1 mils (.00254 mm) to about 30 mils (.762 mm).

100. The method of claim 99 wherein the step of providing the band is defined further as providing the band having a thickness in a range from about 0.1 mils (.00254 mm) to about 30 mils (.762 mm).

101. The method of claim 98 wherein the step of providing the band is defined further as providing the band having a thickness in a range from about 0.1 mils (.00254 mm) to about 5 mils (.127 mm).

102. A method comprising:
providing a flower pot having an upper end, a lower end, an outer peripheral surface and a pot opening extending through the upper end thereof and extending into the flower pot forming an inner peripheral surface;
providing a sheet of material having an upper surface, a lower surface and an outer periphery;
providing a band having a first end and a second end; and
extending the sheet of material about the outer peripheral surface of the flower pot with the upper surface of the sheet of material being disposed about adjacent the outer peripheral surface of the flower pot and with a portion of the sheet of material extending above the upper end of the flower pot; and
connecting the first end of the band to the sheet of material via the bonding material and extending the band about at least a portion of the portion of the sheet of material extending above the upper end of the flower pot and pulling a portion of the sheet of material inwardly forming a crimped portion in the sheet of material at a position above the upper end of the flower pot, and connecting the second end of the band to either a portion of the band or a portion of the sheet of material via the bonding material for securing the band in position extending about the portion of the sheet of material, the crimped portion being engageable with the upper end of the flower pot for cooperating to hold the sheet of material in the position extending about the flower pot to provide the decorative covering.

103. The method of claim 102 wherein the step of providing the band is defined further as providing the band constructed of a flexible material selected from a group of materials consisting of paper, metal foil, cloth (natural or synthetic), denim, burlap, polymer film or cling material or combinations thereof.

104. The method of claim 103 wherein the step of providing the band is defined further as providing the band having a thickness in a range from about 0.1 mils (.00254 mm) to about 30 mils (.762 mm).

105. The method of claim 102 wherein the step of providing the band is defined further as providing the band having a thickness in a range from about 0.1 mils (.00254 mm) to about 5 mils (.127 mm).

106. The method of claim 102 wherein the step of extending the band about the portion of the sheet of material and forming the crimped portion is defined further as forming the crimped portion extending radially inwardly toward a central portion of the flower pot opening with the crimped portion extending circumferentially about the pot opening.
